Europäisches Patentamt

European Patent Office

Office européen des brevets

(19)

(11) Veröffentlichungsnummer: **0 307 579 B1**

# (12) EUROPÄISCHE PATENTSCHRIFT

(45) Veröffentlichungstag der Patentschrift:
20.03.91 Patentblatt 91/12

(51) Int. Cl.⁵: **B60T 8/36**

(21) Anmeldenummer: **88111451.6**

(22) Anmeldetag: **16.07.88**

(54) **Magnetgesteuerte Ventileinrichtung.**

(30) Priorität: **12.09.87 DE 3730779**

(43) Veröffentlichungstag der Anmeldung:
**22.03.89 Patentblatt 89/12**

(45) Bekanntmachung des Hinweises auf die
Patenterteilung:
**20.03.91 Patentblatt 91/12**

(84) Benannte Vertragsstaaten:
**AT DE FR GB IT SE**

(56) Entgegenhaltungen:
**DE-B- 2 224 180**

(73) Patentinhaber: **WABCO Westinghouse
Fahrzeugbremsen GmbH
Am Lindener Hafen 21 Postfach 91 12 80
W-3000 Hannover 91 (DE)**

(72) Erfinder: **Höfler, Siegfried, Dipl.-Ing.
Kleine Pfahlstrasse 8
W-3000 Hannover 1 (DE)**
Erfinder: **Petersen, Erwin, Dr.-Ing.
Fliederweg 22
W-3050 Wunstorf 1 (DE)**
Erfinder: **Möller, Johannes, Ing.-grad.
Egestorfer Strasse 31
W-3015 Wennigsen (DE)**
Erfinder: **Rothen, Johann, Dipl.-Ing.
Otto-Lilienthal-Strasse 7
W-3203 Sarstedt (DE)**

(74) Vertreter: **Schrödter, Manfred
WABCO Westinghouse Fahrzeugbremsen
GmbH Am Lindener Hafen 21 Postfach 91 12
80
W-3000 Hannover 91 (DE)**

## Beschreibung

Die Erfindung betrifft eine einem Druckgeber nachgeschaltete, die Druckbeaufschlagung wenigstens eines druckmittelbetätigten Verbrauchers überwachende, magnetgesteuerte Ventileinrichtung nach dem Oberbegriff des Patentanspruchs 1.

Eine derartige Ventileinrichtung ist aus der DE 22 24 180 B2 bekannt. Diese besitzt ein magnetgesteuertes Einlaßventil (dort 2) und ein magnetgesteuertes Auslaßventil (dort 3). Das Einlaßventil wird durch Erregung seines Magneten (dort 12) geschlossen, das Auslaßventil wird durch Erregung seines Magneten (dort 13) geöffnet. In der Druckaufbaustellung sind das Einlaßventil geöffnet und das Auslaßventil geschlossen, also beide Magnete entregt. In der Druckhaltestellung sind das Einlaßventil und das Auslaßventil geschlossen, des ersteren Magnet also erregt. In der Druckabbaustellung sind das Einlaßventil geschlossen und das Auslaßventil geöffnet, also die Magnete beider Ventile gleichzeitig erregt.

Die gleichzeitige Erregung beider Magnete in der Druckabbaustellung bedeutet bei der bekannten Ventileinrichtung infolge der damit verbundenen Verdoppelung des Strombedarfs einen erheblichen Nachteil.

Der Erfindung liegt deshalb die Aufgabe zugrunde, eine derartige Ventileinrichtung mit einfachen Mitteln derart auszubilden, daß sie ohne gleichzeitige Erregung zweier Magnete auskommt.

Diese Aufgabe wird durch die im Patentanspruch 1 angegebene Erfindung gelöst. Weiterbildungen und vorteilhafte Ausgestaltungen sind in den Unteransprüchen angegeben.

Die Erfindung läßt sich mit jeder geeigneten Art Druckmittel ausführen. Üblicherweise wird das im Druckentlastungsraum gesammelte Druckmittel wieder einer Druckmittelquelle zugeführt, d.h. auf einen Vorratsdruck hochgespannt. Im Falle der Verwendung von Druckluft als Druckmittel läßt sich in vorteilhafter Weise die Atmosphäre als Druckentlastungsraum heranziehen.

Es liegt auf der Hand, daß die nachstehend auf ein Fahrzeug bezogenen Erläuterungen für jede andere Art System und Verbraucher gelten, in denen Probleme der vorliegend angesprochenen Arten auftreten.

Als Druckgeber kommt beispielsweise jede geeignete Einrichtung in Frage, die abstufbar einen Bremsdruck aussteuern kann. Nur beispielhaft seien in diesem Zusammenhang ein Motorwagen-Bremsventil, ein Anhänger-Bremsventil und ein auf elektrische Signale reagierender Druckgeber, wie er in einer elektrisch gesteuerten Bremsanlage vorkommt, erwähnt. Als Druckgeber kommt auch eine Kombination der soeben erwähnten Geräte mit einer nachgeschalteten Einrichtung wie einem lastabhängigen Bremskraftregler und/oder einem Relaisventil in Betracht.

Für einen Anhänger, der üblicherweise über Steckverbindungen und lange Leitungen von der elektrischen Anlage eines Zugfahrzeugs versorgt wird, ist infolge der begrenzten Belastbarkeit der Steckverbindungen und der durch die Steckverbindungen und die langen Leitungen hervorgerufenen Spannungsverluste die Frage des Strombedarfs von besonderer Bedeutung, dies umso mehr, wenn an Lastzüge mit mehreren aufeinander folgenden Anhängern gedacht wird, wie sie in einigen Ländern üblich sind. Die Erfindung findet deshalb ein bevorzugtes Einsatzgebiet in einer Anhänger-Bremsanlage.

Die Erfindung ermöglicht auch eine Entlastung bzw. geringer belastbare und damit kostengünstigere Ausbildung elektrischer Steuereinrichtungen, wie sie bei blockiergeschützten Kraftfahrzeug- und Anhänger-Bremsanlagen vorkommen. Die Erfindung findet deshalb ein weiteres bzw. ein zusätzliches vorteilhaftes Einsatzgebiet in einer derartigen blockiergeschützten Fahrzeug-Bremsanlage.

Der Einsatz eines Relaisventils, wie ihn die Erfindung vorsieht, kann in einer blockiergeschützten Fahrzeug-Bremsanlage insofern problematisch sein, als bei den bekannten Relaisventilen der Bremsdruck im nachgeordneten wenigstens einen Bremszylinder dem Steuerdruck (zeitlich) nacheilt. Dies hat seine Ursache darin, daß das große bei einer Bremsbetätigung aufgenommene Druckmittelvolumen des Bremszylinders und der Druckmittelzuführung zwischen demselben und dem Relaisventil später auf den Bremsdruck aufgefüllt ist als das vergleichsweise geringe Volumen der Steuereinrichtung und der Steuerleitung des Relaisventils. Nehmen wir an, die Ventileinrichtung befinde sich in der Druckaufbaustellung. Gibt nun bei einem bestimmten Bremsdruck in dem Bremszylinder die Blockierschutzanlage ein Druckhaltesignal, so wird der Steuerdruckanstieg praktisch sofort abgebrochen, während der dem Steuerdruck nacheilende Bremsdruck im Bremszylinder weiter ansteigt, bis er sich wenigstens im wesentlichen dem Steuerdruck angeglichen hat. Dieser weitere Anstieg des Bremsdrucks im Bremszylinder kann aber zu einem unerwünscht hohen Schlupf des zugeordneten Fahrzeugrades bzw. zu einem eigentlich nicht beabsichtigten Umschalten der Ventileinrichtung in die Druckabbaustellung, und dies häufig pulsierend, führen. Eine entsprechende Wirkung tritt infolge der Nacheilung des Bremsdrucks in dem Bremszylinder in einer Druckabbaustellung auf. Allerdings ist die Folge in diesem Fall, daß das Fahrzeugrad unterbremst wird und der Druckmittelverbrauch steigt. Die Erfindung schafft hier Abhilfe, wenn der Durchflußwiderstand des Absperrventils und/oder der Durchflußwiderstand des Umschaltventils, wie in Unteransprüchen angegeben, auf das Volumen des Bremszylinders und den Durchflußwiderstand der Druckmittelzuführung abgestimmt sind.

In Fortbildung dieser Ausgestaltung können zur Einstellung dieses Durchflußwiderstands Drosseln herangezogen werden. Die erwähnte Abstimmung des Durchflußwiderstands kann, wenn sowohl beim Absperrventil als auch beim Umschaltventil vorgenommen, zu unterschiedlichen Ergebnissen, z.B. unterschiedlichen Strömungsquerschnitten, führen, da die Nacheilung des Bremsdrucks im Bremszylinder beim Druckabbau geringer ist als beim Druckaufbau. Das liegt daran, daß der Druckabbau im Vergleich zum Druckaufbau in der Regel über einen größeren Querschnitt und auf einem kürzeren Weg erfolgt.

Für den Fall, daß die Ventileinrichtung mit abgestimmtem Durchflußwiderstand des Absperrventils und/oder des Umschaltventils alternativ für mehrere Bremszylinder-Bestückungen mit unterschiedlichen bei der Bremsbetätigung aufgenommenen Druckmittelvolumina eingesetzt werden soll, ist es ratsam, die Abstimmung auf das größte mögliche aufgenommene Druckmittelvolumen vorzunehmen. In diesem Fall wird das Zeitverhalten bei den Bestückungen mit kleinerem aufgenommenem Druckmittelvolumen, verglichen mit einer Ausgestaltung ohne abgestimmten Durchflußwiderstand, zwar verschlechtert, d.h. dem Zeitverhalten der Bestückung mit dem größten aufgenommenen Volumen angeglichen ; dieser Nachteil wird jedoch durch den Vorteil einer einheitlichen Ausbildung der Ventileinrichtung mehr als ausgeglichen.

Ist der Bremsdruckgeber in der Steuerleitung stromaufwärts des Absperrventils und des Umschaltventils angeordnet, so bietet eine Überbrückung der letzteren durch eine Einweg-Umgehungsleitung in Strömungsrichtung zum Bremsdruckgeber den Vorteil, daß bei einer Druckentlastung über den Bremsdruckgeber die Druckentlastung der Steuereinrichtung des Relaisventils nicht über das Absperrventil und das Umschaltventil zu erfolgen braucht, was einen Schnellöse-Effekt des Bremszylinders zur Folge hat ; dies insbesondere dann, wenn der Durchflußwiderstand des Absperrventils und/oder des Umschaltventils, wie weiter oben beschrieben, abgestimmt ist. Vorteilhaft ist in diesem Fall auch, daß eine Druckentlastung über den Bremsdruckgeber bei jeder Stellung des Absperrventils und des Umschaltventils möglich ist.

Ein (weiterer) Schnellöse-Effekt läßt sich auch erzielen, wenn der Magnet des Umschaltventils derart mit einem Bremslichtschalter verknüpft ist, daß er beim Abfall des Bremslichtschalters wenigstens impulsmäßig (d.h. zeitweise) erregt wird. Dadurch wird die Steuereinrichtung des Relaisventils statt über die gesamte Länge der Steuerleitung auf kurzem Wege über das Umschaltventil druckentlastet.

Ein Schutz gegen Verschmutzung und andere nachteilige Umwelteinflüsse sowie die Möglichkeit einer einfachen Schalldämpfung ergibt sich, wenn die Druckentlastungseinrichtung des Umschaltventils mit der Druckentlastungseinrichtung des Relaisventils zusammengeführt wird.

Die Erfindung wird nachstehend unter Angabe weiterer Vorteile anhand von in Zeichnungen dargestellten Ausführungsbeispielen erläutert. Dabei werden für gleiche Funktionen durchgehend gleiche Bezugszeichen verwendet.

Es zeigen :

Fig. 1 schematisch eine Ventileinrichtung in einer Bremsanlage,

Fig. 2 schematisch eine andere Ausgestaltung der Ventileinrichtung nach Fig. 1 in einer anderen Bremsanlage.

Die Bremsanlagen beider Ausführungsbeispiele sind druckluftbetätigt, sie stehen aber auch bei entsprechender Anwendung für Bremsanlagen mit anderen Druckmitteln.

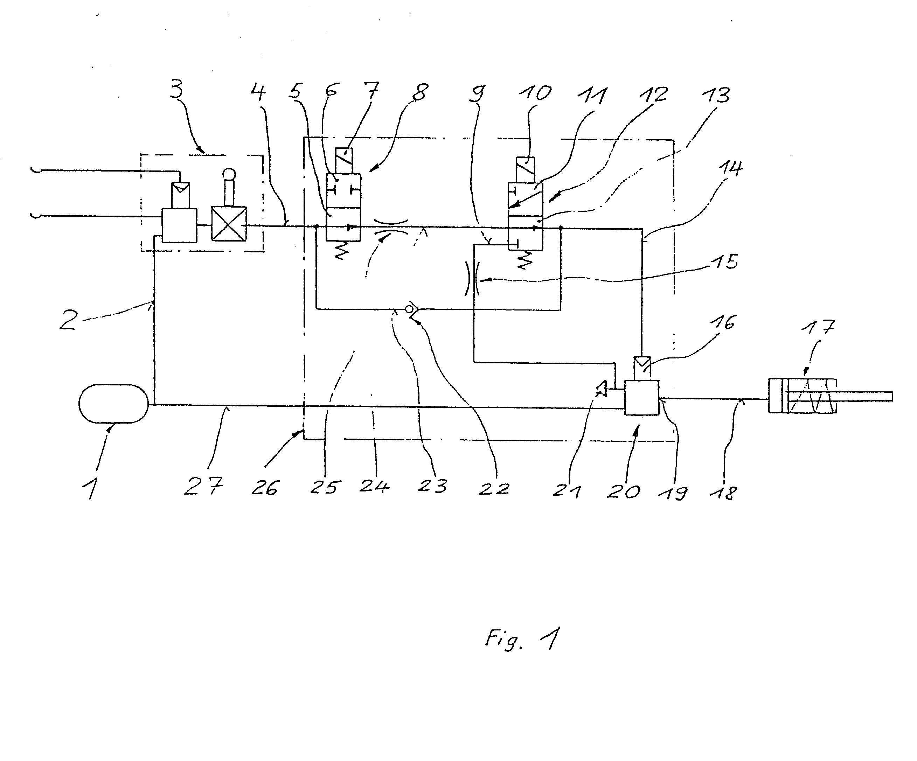

In Fig. 1 ist eine einem Bremsdruckgeber (3) nachgeschaltete Ventileinrichtung dargestellt, die aus einem Relaisventil (20), einem magnetgesteuerten Abschaltventil (8) und einem magnetgesteuerten Umschaltventil (12) besteht.

Das Relaisventil (20) ist an seinem Arbeitsausgang (19) über eine Druckmittelzuführung (18) mit einem Bremszylinder (17) verbunden, der auch für eine Mehrzahl von Bremszylindern repräsentativ sein soll. Das Relaisventil (20) verbindet je nach Ansteuerung den Bremszylinder (17) über die Druckmittelzuführung (18) über eine Vorratsleitung (27) mit einer Druckmittelquelle (1) oder über seine Druckentlastungseinrichtung (21) mit der Atmosphäre.

An seiner Steuereinrichtung (16) ist das Relaisventil (20) mit einer Steuerleitung (4, 24, 14) verbunden. Der Bremsdruckgeber (3) ist dieser vorgeschaltet und verbindet sie je nach seiner Ansteuerung über eine Vorratsleitung (2) mit der Druckmittelquelle (1) oder der Atmosphäre. In der Steuerleitung (4, 24, 14) sind das Absperrventil (8) und das Umschaltventil (12) angeordnet, und zwar das Absperrventil (8) stromaufwärts des Umschaltventils (12).

Der Bremsdruckgeber (3) ist als Kombination aus einem Anhänger-Bremsventil und einem lastabhängigen Bremskraftregler, beide in bekannter Weise aufgebaut und daher nicht näher beschrieben, dargestellt, steht aber für alle Einrichtungen der in der Beschreibungseinleitung erwähnten Art.

Das Abschaltventil (8) weist eine erste Stellung (5) und eine zweite Stellung (6) auf. In der ersten Stellung (5), in die es bei entregtem zugehörigen Magneten (7) zurückgestellt wird, gibt das Absperrventil (8) die Steuerleitung (4, 24, 14) frei. In seiner zweiten Stellung (6), in die es durch Erregung des Magneten (7) gestellt wird, sperrt das Absperrventil (8) die Steuerleitung (4, 24, 14).

Das Umschaltventil (12) weist eine erste Stellung (13) und eine zweite Stellung (11) auf. In der ersten Stellung (13), in die es bei entregtem zugehörigen Magneten (10) zurückgestellt wird, gibt das Umschaltventil die Steuerleitung (4, 24, 14) frei. In seiner zweiten Stellung (11), in die es durch Erregung seines Magneten (10) gestellt wird, sperrt das Umschaltventil (12) die Steuerleitung (4, 24, 14) und verbindet deren stromabwärts gelegenen Teil (14) und damit die Steuereinrichtung (16) des Relaisventils (20) mit der Atmosphäre.

Zur Rückstellung des Absperrventils (8) und des Umschaltventils (12) in die jeweils erste Stellung (5 bzw. 13) sind Federn vorgesehen. Die Rückstellung kann aber auch auf jede andere geeignete Weise erfolgen, beispielsweise durch den Vorratsdruck.

Die Ventileinrichtung in ihrem bisher beschriebenen Grundumfang und die weiteren Teile der Bremsanlage wirken wie folgt zusammen.

Im Normalbetrieb sind die Magnete (7) und (10) entregt und die Steuerleitung (4, 24, 14) durchgängig. In dieser Druckaufbaustellung der Ventileinrichtung wird ein vom Bremsdruckgeber (3) ausgesteuerter Bremsdruck zur Steuereinrichtung (16) des Relaisventils (20) durchgelassen und von dem Relaisventil (20) über die Druckmittelzuführung (18) in bekannter Weise in Bremsdruck im Bremszylinder (17) umgesetzt.

Aus der Druckaufbaustellung ist die Ventileinrichtung durch Erregung des Magneten (7) des Absperrventils (8) in eine Druckhaltestellung stellbar. In dieser kann infolge der Absperrung der Steuerleitung (4, 24, 14) ein vom Bremsdruckgeber (3) ausgesteuerter Bremsdruck bzw. ein weiterer Anstieg dieses Bremsdrucks nicht zu der Steuereinrichtung (16) des Relaisventils (20) durchdringen mit der Folge, daß sich auch im Bremszylinder (17) ein Bremsdruck nicht aufbaut bzw. vorhandener Bremsdruck nicht weiter steigt.

Aus der Druckaufbaustellung ist die Ventileinrichtung durch Erregung des Magneten (10) in eine Druckabbaustellung stellbar. Aus der Druckhaltestellung in die Druckabbaustellung ist die Ventileinrichtung durch Erregung des Magneten (10) bei gleichzeitiger Entregung des Magneten (7) stellbar. In der Druckabbaustellung ist die Steuerleitung (4, 24, 14) durch das Umschaltventil (12) gesperrt, gleichzeitig sind aber ihr stromabwärts des Umschaltventils (12) gelegener Teil (14) und damit die Steuereinrichtung (16) des Relaisventils (20) mit der Atmosphäre verbunden. Aufgrund des dadurch hervorgerufenen Steuerdruckabfalls bewirkt das Relaisventil über die Druckmittelzuführung (18) in bekannter Weise einen entsprechenden Abfall des Bremsdrucks im Bremszylinder (17).

Die Ventileinrichtung ist also durch Erregung nur eines der Magneten (7 bzw. 10) zwischen der Druckaufbaustellung, der Druckhaltestellung und der Druckabbaustellung umstellbar.

Diese magnetgesteuerte Umstellmöglichkeit der Ventileinrichtung kann nach bekannten Verfahren zum Blockierschutz des dem Bremszylinder (17) zugeordneten Fahrzeugrades ausgewertet werden.

Über die bisher beschriebene Grundausführung hinaus zeigt das Ausführungsbeispiel noch eine dem Absperrventil (8) zugeordnete Drossel (25) und eine der mit (9) bezeichneten Druckentlastungseinrichtung des Umschaltventils (12) zugeordnete Drossel (15). Diese Drosseln können als körperlich vorhanden angesehen werden, können aber auch für die allgemeine Aussage stehen, daß das Absperrventil (8) und/oder das Umschaltventil (12) hinsichtlich des jeweiligen Durchflußwiderstands zur wenigstens angenäherten Minimierung der (zeitlichen) Nacheilung des Bremsdrucks im Bremszylinder gegenüber dem Steuerdruck des Relaisventils (20) ausgelegt sind.

Außerdem zeigt das Ausführungsbeispiel mit der Bezeichnung (23, 22) eine Einweg-Umgehungsleitung, welche das Absperrventil (8) und das Umschaltventil (12) in Strömungsrichtung zum Bremsdruckgeber (3) überbrückt. Die Einwegwirkung dieser Leitung wird durch ein Rückschlagventil (22) erzielt, welches eine Strömung vom Druckgeber (3) zum Steueranschluß (16) des Relaisventils (20) sperrt und die Strömung in Gegenrichtung freigibt.

Ferner zeigt das Ausführungsbeispiel durch eine nicht näher bezeichnete Zusammenführungsleitung, daß die Druckentlastungseinrichtung (9) des Umschaltventils (12) mit der Druckentlastungseinrichtung (21) des Relaisventils (20) verbunden ist.

In nicht näher dargestellter Weise ist der Magnet (10) des Umschaltventils (12) in der in der Beschreibungseinleitung angegebenen Weise mit einem Bremslichtschalter des die Ventileinrichtung tragenden Fahrzeugs verknüpft.

Hinsichtlich der mit den vier zuletzt genannten Ausgestaltungen erzielten Vorteile wird auf die Beschreibungseinleitung verwiesen.

Schließlich ist durch eine gestrichelt dargestellte Umfassungslinie angedeutet, daß zur Erzielung einer kompakten und kostengünstigen Bauweise das Relaisventil (20), das Absperrventil (8), das Umschaltventil (12), die dazwischen liegenden Teile (24) und (14) der Steuerleitung (4, 24, 14) sowie die Einweg-Umgehungsleitung (23, 22), die Drosseln (25) und (15) und die Zusammenführungsleitung der Druckentlastungseinrichtungen (9) des Umschaltventils (12) und (21) des Relaisventils (20) zu einer Baueinheit (26) vereinigt sind. Es liegt auf der Hand, daß eine Baueinheit nicht zwangsläufig aus den vorliegend vereinigten Bestandteilen bestehen muß, sondern daß auch nur einzelne Bestandteile zu einer Baueinheit zusammengefaßt sein können und daß die Bestandteile auch in mehreren Baueinheiten gruppiert sein können.

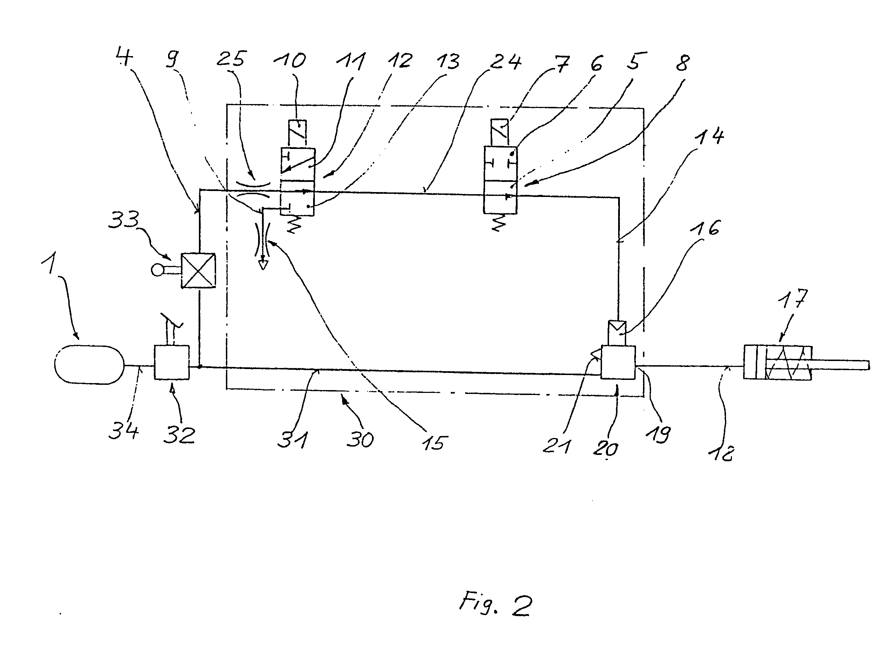

Das Ausführungsbeispiel nach Fig. 2 weicht im nachstehend beschriebenen Umfang von dem Ausführungsbeispiel nach Fig. 1 ab und entspricht jenem im übrigen.

Die Lagen des Absperrventils (8) und des Umschaltventils (12) in der Steuerleitung (4, 24, 14) sind vertauscht, so daß das Absperrventil (8) stromabwärts des Umschaltventils (12) angeordnet ist.

Der Druckgeber ist als Kombination aus einem Motorwagen-Bremsventil (32) und einem lastabhängigen Bremskraftregler (33), beide in bekannter Weise aufgebaut und daher nicht näher beschrieben, dargestellt. Es kommt aber wieder auch jede geeignete Art Druckgeber in Betracht.

Von dem Druckgeber sind das Motorwagen-Bremsventil (32) der hier mit (31) bezeichneten Vorratsleitung des Relaisventils (20) und der Bremskraftregler (33) der Steuerleitung (4, 24, 14) vorgeschaltet. Vorratsseitig ist der Bremskraftregler (33) an den Ausgang des Motorwagen-Bremsventils (32) angeschlossen, während dieser vorratsseitig über eine Leitung (34) mit der Druckmittelquelle (1) verbunden ist.

Es liegt auf der Hand, daß Motorwagen-Bremsventil (32) und Bremskraftregler (33) wie beim vorigen Ausführungsbeispiel baulich vereinigt sein können, aber auch, daß Anhänger-Bremsventil des vorigen Ausführungsbeispiels und das Motorwagen-Bremsventil allein als Druckgeber vorkommen können.

Die dem Absperrventil (8) zugeordnete Drossel (25) ist stromaufwärts des Umschaltventils (12) angeordnet. Diese Anordnung hat den Vorteil, daß in der Druckabbaustellung die Drossel (25) nicht in der Verbindung zwischen Steuereinrichtung (16) des Relaisventils (20) und Druckentlastungsausgang (9) des Umschaltventils (12) liegt und die Druckentlastung der Steuereinrichtung (16) verzögert.

Ein Vergleich der Ausführungsbeispiele nach Fig. 1 und Fig. 2 läßt für das erstgenannte den Vorteil erkennen, daß die Druckentlastung der Steuereinrichtung (16) in der Druckabbaustellung direkt über die Druckentlastungseinrichtung (9) des Umschaltventils (12) erfolgt und nicht, wie im Falle des Ausführungsbeispiels nach Fig. 2, unter Zwischenschaltung des Absperrventils (8).

Durch die gestrichelt dargestellte Umfassungslinie ist angedeutet, daß auch die vorliegende Ventileinrichtung zu einer mit (30) bezeichneten Baueinheit vereinigt werden kann.

Im übrigen gelten die zum Ausführungsbeispiel nach Fig. 1 gegebenen Erläuterungen, wenigstens entsprechend, auch für das Ausführungsbeispiel nach Fig. 2, ebenso wie die für das letztere gegebenen Erläuterungen, wenigstens entsprechend, für jenes gelten.

Der Fachmann erkennt, daß sich der Schutzbereich der vorliegenden Erfindung nicht in den Ausführungsbeispielen erschöpft, sondern alle Ausgestaltungen erfaßt, deren Merkmale sich den Patentansprüchen unterordnen. Insbesondere erkennt der Fachmann, daß die Erfindung in entsprechender Anwendung auch Relaisventile mit gegenüber dem Steuerdruck über- oder untersetzender Druckcharakteristik erfaßt.

## Ansprüche

1. Einem Druckgeber (3, 32, 33) nachgeschaltete, die Druckbeaufschlagung wenigstens eines druckmittelbetätigten Verbrauchers (17) überwachende magnetgesteuerte Ventileinrichtung (26, 30), die in einer Druckaufbaustellung einen vom Druckgeber (3, 32, 33) bestimmten Druck zu dem Verbraucher (17) durchläßt, in einer Druckhaltestellung die Druckmittelzuführung zum Verbraucher (17) sperrt und in einer Druckabbaustellung den Verbraucher (17) mit einem wenigstens im wesentlichen überdruckfreien Druckentlastungsraum (21) verbindet, gekennzeichnet durch die Merkmale :

a) Es ist ein Relaisventil (20) vorgesehen, an dessen Arbeitsausgang (19) die Druckmittelzuführung (18) des Verbrauchers (17) angeschlossen ist ;

b) in der Steuerleitung (4, 24, 14) des Relaisventils (20) sind in Reihe ein magnetgesteuertes Absperrventil (8), welches bei erregtem Magneten (7) die Steuerleitung (4, 24, 14) sperrt, und ein magnetgesteuertes Umschaltventil (12), welches bei erregtem Magneten (10) die Steuerleitung (4, 24, 14) sperrt und deren stromabwärts des Umschaltventils (12) gelegenen Teil (14) mit dem Druckentlastungsraum verbindet, angeordnet.

2. Ventileinrichtung nach Anspruch 1, dadurch gekennzeichnet, daß als Druckmittel Druckluft dient und der Druckentlastungsraum die Atmosphäre ist.

3. Ventileinrichtung nach einem der Ansprüche 1 oder 2, dadurch gekennzeichnet, daß der Druckgeber (3) der Steuerleitung (4, 24, 14) des Relaisventils (20) vorgeschaltet ist.

4. Ventileinrichtung nach einem der Ansprüche 1 oder 2, dadurch gekennzeichnet, daß der Druckgeber (32, 33) der Vorratsleitung (31) des Relaisventils (20) vorgeschaltet ist.

5. Ventileinrichtung nach einem der vorhergehenden Ansprüche, dadurch gekennzeichnet, daß das Absperrventil (8) stromaufwärts des Umschaltventils (12) angeordnet ist.

6. Ventileinrichtung nach einem der Ansprüche 1 bis 4, dadurch gekennzeichnet, daß das Absperrventil (8) stromabwärts des Umschaltventils (12) angeordnet ist.

7. Ventileinrichtung nach einem der vorhergehenden Ansprüche, gekennzeichnet durch die Merkmale : Das Absperrventil (8) ist hinsichtlich seines Durchflußwiderstands derart ausgelegt, daß die in bekannter Weise durch das bei einer Verbraucherbetätigung aufgenommene Druckmittelvolumen des Verbrauchers (17) und den Durchflußwiderstand der Druckmittelzuführung (18) bedingte Nacheilung des Drucks
im Verbraucher (17) gegenüber dem Steuerdruck des
Relaisventils (20) nicht oder unwesentlich größer ist
als zum vollen Öffnen des Relaisventils (20) erforderlich ist.

8. Ventileinrichtung nach Anspruch 7, dadurch gekennzeichnet, daß zur Einstellung des Durchflußwiderstands des Absperrventils (8) eine Drossel (25) vorgesehen ist.

9. Ventileinrichtung nach einem der vorhergehenden Ansprüche,
gekennzeichnet durch die Merkmale :
Das Umschaltventil (12) ist hinsichtlich seines Durchflußwiderstands so ausgelegt, daß die in bekannter Weise durch das bei einer Verbraucherbetätigung aufgenommene Druckmittelvolumen des Verbrauchers (17) und den Durchflußwiderstand der Druckmittelzuführung (18) bedingte Nacheilung des Drucks im Verbraucher (17) gegenüber dem Steuerdruck des Relaisventils (20) nicht oder unwesentlich größer ist als zum vollen Öffnen des Relaisventils (20) erforderlich ist.

10. Ventileinrichtung nach Anspruch 9, dadurch gekennzeichnet, daß zur Einstellung des Durchflußwiderstands des Umschaltventils (12) eine Drossel (15) vorgesehen ist.

11. Ventileinrichtung nach den Ansprüchen 6 und 8, dadurch gekennzeichnet, daß die dem Absperrventil (8) zugeordnete Drossel (25) stromaufwärts des Umschaltventils (12) angeordnet ist.

12. Ventileinrichtung nach einem der Ansprüche 3 bis 11, dadurch gekennzeichnet, daß das Absperrventil (8) und das Umschaltventil (12) durch eine Einweg-Umgehungsleitung (23, 22) in Strömungsrichtung zum Bremsdruckgeber (3) überbrückt sind.

13. Ventileinrichtung nach einem der vorhergehenden Ansprüche, dadurch gekennzeichnet, daß der Magnet (10) des Umschaltventils (12) derart mit einem Bremslichtschalter verknüpft ist, daß der Magnet (10) des Umschaltventils (12) beim Abfall des Bremslichtschalters wenigstens impulsmäßig erregt wird.

14. Ventileinrichtung nach einem der vorhergehenden Ansprüche, dadurch gekennzeichnet, daß die Druckentlastungseinrichtung (9) des Umschaltventils (12) mit der Druckentlastungseinrichtung (21) des Relaisventils (20) zusammengeführt ist.

15. Ventileinrichtung nach einem der vorhergehenden Ansprüche, dadurch gekennzeichnet, daß das Relaisventil (20), das Absperrventil (8) und das Umschaltventil (12) und die dazwischen liegenden Teile (24, 14) der Steuerleitung (4, 24, 14) zu einer Baueinheit vereinigt sind.

16. Ventileinrichtung nach Anspruch 15 sowie wenigstens einem der Ansprüche 8 oder 10 bis 11, dadurch gekennzeichnet, daß die Baueinheit wenigstens eine der Drosseln (15 bzw. 25) enthält.

17. Ventileinrichtung nach Anspruch 12 und einem der Ansprüche 15 oder 16, dadurch gekennzeichnet, daß die Baueinheit (26) auch die Einweg-Umgehungsleitung (23, 22) enthält.

## Claims

1. A magnetically operated valve device (26, 30) connected in the supply from a pressure regulator (3, 32, 33) and monitoring the volume of pressure medium admitted to at least one pressure-medium- operated consumer (17), which valve device in a pressure-build-up position allows a pressure determined by the pressure regulator (3, 32, 33) through to the consumer (17), in a pressure-hold position blocks the supply of pressure medium to the consumer (17) and in a pressure-release position connects the consumer (17) to a pressure-relief chamber (21) that is at least substantially free from excess pressure, characterized by the features :
   a) a relay valve (20) is provided, to the working output (19) of which the pressure medium feed (18) of the consumer (17) is connected ;
   b) in the control line (4, 24, 14) of the relay valve (20) there are arranged in series a magnetically operated check valve (8), which blocks the control line (4, 24, 14) when the magnet (7) is energized, and a magnetically operated reversing valve (12), which blocks the control line (4, 24, 14) when the magnet (10) is energized and connects the part (14) thereof positioned downstream of the reversing valve (12) to the pressure-relief chamber.

2. A valve device according to claim 1, characterized in that compressed air serves as the pressure medium and the pressure-relief chamber is the atmosphere.

3. A valve device according to one of claims 1 or 2, characterized in that the pressure regulator (3) is connected to supply the control line (4, 24, 14) of the relay valve (20).

4. A valve device according to one of claims 1 or 2, characterized in that the pressure regulator (32, 33) is connected to supply the supply line (31) of the relay valve (20).

5. A valve device according to one of the preceding claims, characterized in that the check valve (8) is arranged upstream of the reversing valve (12).

6. A valve device according to one of claims 1 to 4, characterized in that the check valve (8) is arranged downstream of the reversing valve (12).

7. A valve device according to one of the preceding claims, characterized by the features : the check valve (8) is designed in respect of its flow resistance so that the lagging of the pressure in the consumer (17), caused in known manner by the volume of pressure medium taken up on operation of the consumer and the flow resistance of the pressure medium feed (18), behind the control pressure of the relay valve (20) is not larger, or not substantially larger, than is required for full opening of the relay valve (20).

8. A valve device according to claim 7, characterized in that a throttle (25) is provided to adjust the flow resistance of the check valve (8).

9. A valve device according to one of the preceding claims, characterized by the features : the reversing valve (12) is designed in respect of its flow resistance so that the lagging of the pressure in the consumer (17), caused by the pressure medium volume taken up on operation of the consumer (17) and the flow resistance of the pressure medium feed (18), behind the control pressure of the relay valve (20) is not larger, or not substantially larger, than is required for full opening of the relay valve (20).

10. A valve device according to claim 9, characterized in that a throttle (15) is provided for adjusting the flow resistance of the reversing valve (12).

11. A valve device according to claims 6 and 8, characterized in that the throttle (25) associated with the check valve (8) is arranged upstream of the reversing valve (12).

12. A valve device according to one of claims 3 to 11, characterized in that the check valve (8) and the reversing valve (12) are bridged by a one-way by-pass (23, 22) in the flow direction to the brake pressure regulator (3).

13. A valve device according to one of the preceding claims, characterized in that the magnet (10) of the reversing valve (12) is coupled with a brake light switch so that the magnet (10) of the reversing valve (12) is energized at least in bursts when the brake light switch is released.

14. A valve device according to one of the preceding claims, characterized in that the pressure-relief device (9) of the reversing valve (12) is combined with the pressure-relief device (21) of the relay valve (20).

15. A valve device according to one of the preceding claims, characterized in that the relay valve (20), the check valve (8) and the reversing valve (12), and the parts (24, 14) of the control line (4, 24, 14) lying therebetween, are combined to form a module.

16. A valve device according to claim 15 and at least one of claims 8 or 10 to 11, characterized in that the module contains at least one on the throttles (15 and 25, respectively).

17. A valve device according to claim 12 and one of claims 15 or 16, characterized in that the module (26) also contains the one-way by-pass (23, 22).

**Revendications**

1. Dispositif de distribution (26, 30) à commande électromagnétique, monté à la suite d'un générateur de pression (3, 32, 33) et contrôlant l'application de la pression à au moins un récepteur (17) mû par un fluide de pression, dispositif qui, lorsqu'il occupe une position de montée de la pression, laisse passer une pression déterminée par le générateur (3, 32, 33) au récepteur (17), bloque l'amenée de fluide de pression au récepteur (17) à une position de maintien de la pression et relie le récepteur (17) à un espace de détente (21) qui est au moins essentiellement exempt de surpression à une position de réduction de la pression, caractérisé en ce qu'il comprend :

a) un robinet relais (20) avec une sortie de travail (19) à laquelle est raccordée la canalisation (18) d'amenée de fluide de pression au récepteur (17) et,

b) dans la conduite de commande (4, 24, 14) du robinet relais (20), en série l'une avec l'autre, une soupape d'arrêt (8) commandée par électroaimant et qui coupe la conduite de commande (4, 24, 14) lorsque son électroaimant (7) est excité, et une soupape de commutation (12) commandée par électroaimant et qui, lorsque son électroaimant (10) est excité, coupe la conduite de commande (4, 24, 14) et relie la partie (14) de cette conduite située en aval de la soupape de commutation (12) à l'espace de détente.

2. Dispositif de distribution selon la revendication 1, caractérisé en ce que le fluide de pression est de l'air comprimé et l'espace de détente est l'atmosphère.

3. Dispositif de distribution selon la revendication 1 ou 2, caractérisé en ce que le générateur de pression (3) est prévu en amont de la conduite de commande (4, 24, 14) du robinet relais (20).

4. Dispositif de distribution selon la revendication 1 ou 2, caractérisé en ce que le générateur de pression (32, 33) est prévu en amont de la conduite d'alimentation (31) du robinet relais (20).

5. Dispositif de distribution selon une des revendications précédentes, caractérisé en ce que la soupape d'arrêt (8) est disposée en amont de la soupape de commutation (12).

6. Dispositif de distribution selon une des revendications 1 à 4, caractérisé en ce que la soupape d'arrêt (8) est disposée en aval de la soupape de commutation (12).

7. Dispositif de distribution selon une des revendications précédentes, caractérisé en ce que la soupape d'arrêt (8) est conçue, pour ce qui concerne sa résistance à l'écoulement de fluide, de manière que le retard de la pression dans le récepteur (17), retard qui est provoqué de façon connue par le volume de fluide de pression absorbé par le récepteur (17) lors d'un actionnement de celui-ci, ainsi que par la résistance opposée à l'écoulement de fluide par la canalisation (18) d'amenée de fluide, ne soit pas plus grand, ou ne soit pas notablement plus grand, par rapport à la pression de commande du robinet relais (20), que nécessaire pour l'ouverture complète du robinet relais (20).

8. Dispositif de distribution selon la revendication 7, caractérisé en ce qu'un étranglement (25) est prévu pour l'ajustement de la résistance opposée à l'écoulement de fluide par la soupape d'arrêt (8).

9. Dispositif de distribution selon une des revendications précédentes, caractérisé en ce que la soupape de commutation (12) est conçue, pour ce qui concerne sa résistance à l'écoulement de fluide, de manière que le retard de la pression dans le récepteur (17), retard qui est provoqué de façon connue par le volume de fluide de pression absorbé par le récepteur (17) lors d'un actionnement de celui-ci, ainsi que par la résistance opposée à l'écoulement de fluide par la canalisation (18) d'amenée de fluide, ne soit pas plus grand, on ne soit pas notablement plus grand, par rapport à la pression de commande du robinet relais (20), que nécessaire pour l'ouverture complète du robinet relais (20).

10. Dispositif de distribution selon la revendication 9, caractérisé en ce qu'un étranglement (15) est prévu pour l'ajustement de la résistance opposée par la soupape de commutation (12) à l'écoulement de fluide.

11. Dispositif de distribution selon les revendications 6 et 8, caractérisé en ce que l'étranglement (25) coordonné à la soupape d'arrêt (8) est disposé en amont de la soupape de commutation (12).

12. Dispositif de distribution selon une des revendications 3 à 11, caractérisé en ce que la soupape d'arrêt (8) et la soupape de commutation (12) sont court-circuitées par une conduite de dérivation unidirectionnelle (23, 22) permettant un écoulement du fluide vers le générateur de pression de freinage (3).

13. Dispositif de distribution selon une des revendications précédentes, caractérisé en ce que l'électroaimant (10) de la soupape de commutation (12) est combiné avec un commutateur de feu stop de manière que l'électroaimant (10) de la soupape de commutation (12) soit excité, tout au moins par impulsion, à la désexcitation du commutateur de feu stop.

14. Dispositif de distribution selon une des revendications précédentes, caractérisé en ce que le dispositif de détente (9) de la soupape de commutation (12) et le dispositif de détente (21) du robinet relais (20) sont réunis.

15. Dispositif de distribution selon une des revendications précédentes, caractérisé en ce que le robinet relais (20), la soupape d'arrêt (8) et la soupape de commutation (12), de même que les parties (24, 14) de la conduite de commande (4, 24, 14) situées entre elles, sont rassemblées en un ensemble.

16. Dispositif de distribution selon la revendication 15 ainsi qu'au moins une des revendications 8 ou 10 à 11, caractérisé en ce que l'ensemble contient au moins l'un des étranglements (15 ou 25).

17. Dispositif de distribution selon la revendication 12 et une des revendications 15 ou 16, caractérisé en ce que l'ensemble (26) contient également la conduite de dérivation unidirectionnelle (23, 22).

Fig. 1

EP 0 307 579 B1

Fig. 2